# EUROPEAN PATENT APPLICATION

(11) **EP 4 838 319 A1**
(43) Date of publication of application: **11.11.2026**
(21) Application number: 26175701.7
(22) Date of filing: 30.04.2026
(51) Int. Cl.: G05B 19/042

(54) **SMART CONTROL ASSISTANT FOR INDUSTRIAL CONTROL SYSTEMS**

(30) Priority: 09.05.2025 US 202519203766
(71) Applicant: Schneider Electric Systems USA, Inc., Foxborough, MA 02035 (US)
(72) Inventor: CHINTALA, Vivekananda, SHARON, MA (US); SWAMINATHAN, Sudha, CARMEL, IN (US); DEVIREDDY, Venkata Subba Reddy NMN, FOXBORO, MA (US); KANDULA, Ravi Sudhakar, FOXBORO, MA (US)
(74) Representative: Plasseraud IP

(57) **Abstract**

A method of operating an industrial control system configured to accept a plurality of function calls in a first format includes: receiving a first user input including an instruction in a second format different from the first format, the instruction relating to instructing the industrial control system to perform at least one operation; converting the instruction into structured data using a machine-learning model; receiving, after receiving the first user input, a second user input relating to the at least one operation; generating one or more function calls in the first format based on the structured data and at least a portion of the second user input; and causing the industrial control system to execute the one or more function calls to perform the at least one operation.

## Description

### BACKGROUND

### 1. Field of the Disclosure

At least one example in accordance with the present disclosure generally relates to facilitating the operation of an industrial control system.

### 2. Discussion of Related Art

An industrial control system (ICS), such as a distributed control system (DCS) or centralized control system (CCS), may consist of combinations of hardware and software components that operate together to achieve an industrial objective, such as automatic manufacturing or transportation of various industrial products. An ICS may be configured to directly receive function calls for automating and controlling industrial processes, allowing the ICS to respond to real-time conditions and execute specific operations. An operator of the ICS might input a function call to the ICS to perform one or more control operations.

### SUMMARY

Examples of the methods and systems discussed herein are not limited in application to the details of construction and the arrangement of components set forth in the following description or illustrated in the accompanying drawings. The methods and systems may be capable of implementation in other embodiments and of being practiced or of being carried out in various ways. Examples of specific implementations are provided herein for illustrative purposes and are not intended to be limiting. Acts, components, elements, and features discussed in connection with any one or more examples may be configured to operate and/or be implemented in a similar role in any other examples.

The phraseology and terminology used herein is for the purpose of description. References to examples, embodiments, components, elements, or acts of the systems and methods herein referred to in the singular may also embrace embodiments including a plurality. Similarly, references in plural to embodiments, components, elements, or acts may be implemented as a singularity. References in the singular or plural form may therefore not be intended to limit the presently disclosed systems or methods, their components, acts, or elements. The use herein of "including," "comprising," "having," "containing," "involving," and variations so forth, may encompass the items listed thereafter and equivalents thereof as well as additional items.

References to "or" may be construed as inclusive so that any terms described using "or" may indicate any of a single, more than one, and all of the described terms. For example, the phrase "at least one of A or B" may refer A and/or B-that is, A only, B only, or A and B together. In addition, in the event of inconsistent usages of terms between this document and documents incorporated herein by reference, the term usage in the incorporated documents is supplementary to this document. For irreconcilable differences, the term usage in this document controls.

According to at least one aspect of the present disclosure, in one example, at least one non-transitory computer-readable medium storing thereon sequences of computer-executable instructions for operating an industrial control system configured to accept a plurality of function calls in a first format is disclosed. In one example, the sequences of computer-executable instructions include instructions that instruct at least one processor to: receive a first user input including an instruction in a second format different from the first format, the instruction relating to instructing the industrial control system to perform at least one operation; convert the instruction into structured data using a machine-learning model; receive, after receiving the first user input, a second user input relating to the at least one operation; generate one or more function calls in the first format based on the structured data and at least a portion of the second user input; and cause the industrial control system to execute the one or more function calls to perform the at least one operation.

In one example of the at least one non-transitory computer-readable medium, the machine-learning model includes at least one of a group including GPT-4, Claude 2, LLaMA-2, Gemini, or Mistral models.

In another example of the at least one non-transitory computer-readable medium, the instructions further instruct the at least one processor to convert the second user input into second structured data using a second machine-learning model, and generating the one or more function calls in the first format is performed based on the structured data and the second structured data.

In one example of the at least one non-transitory computer-readable medium, the second format is a natural language text format, and the machine-learning model includes a natural language processing model. In one example of the at least one non-transitory computer-readable medium, the second user input includes information in the natural language text format, receiving the second user input includes converting the information into second structured data using the natural language processing model, and generating the one or more function calls is performed based on the structured data and the second structured data. In another example of the at least one non-transitory computer-readable medium, the second user input includes information in a speech audio format, receiving the second user input includes converting the information into second structured data using a second machine-learning model, the second machine-learning model including a speech recognition model, and generating the one or more function calls is performed based on the structured data and the second structured data. In yet another example of the at least one non-transitory computer-readable medium, the second user input includes information in an image format, receiving the second user input includes converting the information into second structured data using a second machine-learning model, the second machine-learning model including an image recognition model, and generating the one or more function calls is performed based on the structured data and the second structured data.

In one example of the at least one non-transitory computer-readable medium, the second format is a speech audio format, and the machine-learning model includes a speech recognition model.

In another example of the at least one non-transitory computer-readable medium, the second format is an image format, and the machine-learning model includes an image recognition model.

In one example of the at least one non-transitory computer-readable medium, the instructions further instruct the at least one processor to: convert the structured data into at least one command in a third format different from the first format and the second format, and display the at least one command in the third format via a user interface, and generating the one or more function calls is performed based on the at least one command.

In one example of the at least one non-transitory computer-readable medium, the instructions further instruct the at least one processor to display, via a user interface, a prompt to request additional information relating to the at least one operation in response to receiving the first user input, the second user input includes at least a portion of the additional information, and generating the one or more function calls is performed in response to receiving the second user input. In one example of the at least one non-transitory computer-readable medium, the prompt includes information relating to one or more available resources for providing the additional information.

In another example of the at least one non-transitory computer-readable medium, the instructions further instruct the at least one processor to display, via a user interface, a prompt to request confirmation to execute the instruction, the prompt including at least a portion of the structured data, and causing the industrial control system to execute the one or more function calls is performed in response to receiving the confirmation in the second user input.

In one example of the at least one non-transitory computer-readable medium, the at least one operation includes at least one of configuring a hardware component of the industrial control system, diagnosing an alarm signal associated with a hardware component of the industrial control system, or obtaining information relating to a hardware component of the industrial control system.

In another example of the at least one non-transitory computer-readable medium, generating the one or more function calls and/or causing the industrial control system to perform the at least one operation includes communicating with at least one memory device.

According to at least another aspect of the present disclosure, in one example, a computer system for operating an industrial control system configured to accept a plurality of function calls in a first format is disclosed. In one example, the computer system includes: a display screen; an input device configured to receive input from a user; and processing circuitry coupled to a memory configured to: receive a first user input including an instruction in a second format different from the first format, the instruction relating to instructing the industrial control system to perform at least one operation, convert the instruction into structured data using a machine-learning model, receive, after receiving the first user input, a second user input relating to the at least one operation, generate one or more function calls in the first format based on the structured data and at least a portion of the second user input, and cause the industrial control system to execute the one or more function calls to perform the at least one operation.

**In** one example of the computer system, the machine-learning model includes at least one of a group including GPT-4, Claude 2, LLaMA-2, Gemini, or Mistral models.

**In** another example of the computer system, the second format is a natural language text format, and the machine-learning model includes a natural language processing model. In one example of the computer system, the second user input includes information in the natural language text format, receiving the second user input includes converting the information into second structured data using the natural language processing model, and generating the one or more function calls is performed based on the structured data and the second structured data.

According to at least yet another aspect of the present disclosure, in one example, a method of operating an industrial control system configured to accept a plurality of function calls in a first format is disclosed. In one example, the method includes: receiving a first user input including an instruction in a second format different from the first format, the instruction relating to instructing the industrial control system to perform at least one operation; converting the instruction into structured data using a machine-learning model; receiving, after receiving the first user input, a second user input relating to the at least one operation; generating one or more function calls in the first format based on the structured data and at least a portion of the second user input; and causing the industrial control system to execute the one or more function calls to perform the at least one operation.

### BRIEF DESCRIPTION OF THE DRAWINGS

Various aspects of at least one embodiment are discussed below with reference to the accompanying figures, which may not be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or substantially similar component that is illustrated in various figures may be represented by a like numeral. For purposes of clarity, not every component may be labeled in every figure. In the figures:
FIG. 1 illustrates a computer system including a smart control assistant (SCA) according to an example;
FIG. 2 illustrates a block diagram including an SCA according to an example;
FIG. 3 illustrates a process for operating an SCA according to an example;
FIG. 4 illustrates a screenshot of a text exchange between an SCA and a user who wishes to create a basic network according to an example;
FIG. 5 illustrates a screenshot of an industrial control system (ICS) window in response to an operation of an ICS facilitated by an SCA according to an example;
FIG. 6 illustrates a screenshot of a text exchange between an SCA and a user who wishes to create and assign a fieldbus module according to an example; and
FIG. 7 illustrates another screenshot of an ICS window in response to operations of an ICS facilitated by an SCA according to an example.

### DETAILED DESCRIPTION

When operating an industrial control system (ICS), a user may need to interact with the ICS to perform various operations. For example, the user may need to generate and input instructions to configure certain components of the ICS, such as setting up a basic control network or selecting and assigning a device to an existing control network, to perform diagnostics on the ICS, to manage information relating to the ICS, and so forth. In many examples, the ICS may only be configured to accept function calls in a particular format (for example, a DirectAccess script). Accordingly, the ICS may not be able to interpret instructions that are structured in a command format different than the function-call format. Moreover, it may be desirable to allow the user to input instructions in formats more natural or convenient to the user, such as those in the form of natural language texts, human utterances, or scanned images of field device specification labels to ease the burden of the user and improve accuracy and efficiency.

The present disclosure relates to a smart control assistant (SCA) for facilitating a user's interaction with the ICS to have the ICS perform desired operations. In some examples, the SCA may allow the user to input instructions in a user-friendly format that is incompatible with the function-call format. The SCA may automatically interpret and convert the instructions into function calls to be provided to the ICS for execution.

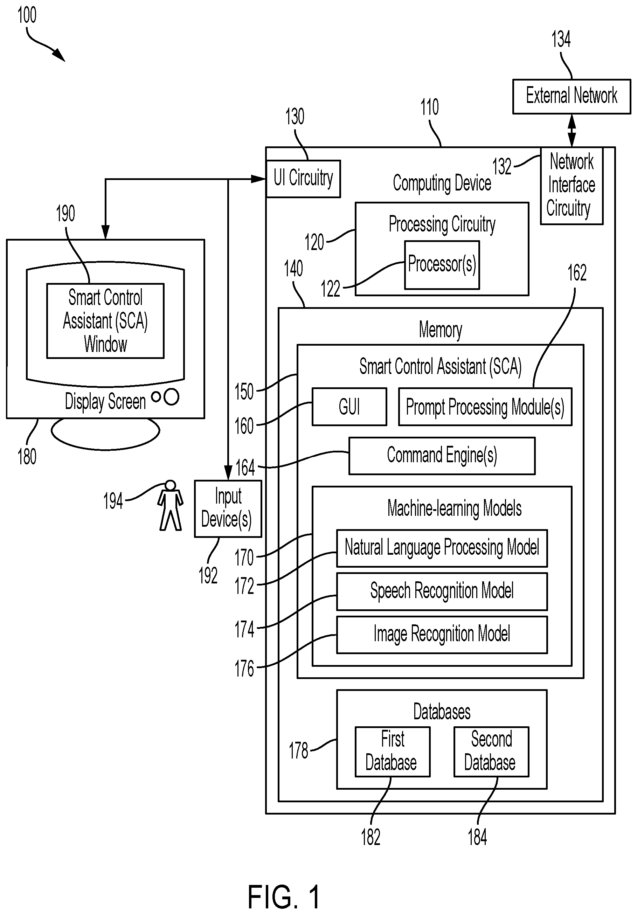

FIG. 1 illustrates a computer system 100 including an SCA 150 according to an example. In some examples, the system 100 includes at least one computing device 110, which may be any kind of computing device, such as a personal computer, laptop, workstation, server, enterprise server, tablet, smartphone, router, and so forth. In one example, the computing device 110 is a personal computer or desktop. The computing device 110 includes processing circuitry 120, user interface (UI) circuitry 130, network interface circuitry 132, and memory 140. The computing device 110 may also include various additional features (not illustrated), such as interconnection traces and buses, and so forth. The network interface circuitry 132 may be configured to connect the computing device 110 to an external network 134 (for example, the Internet) with or without connecting wires for accessing a cloud server and/or communicating with and operating an ICS.

The processing circuitry 120 may include one or more processors 122 ("processor[s] 122") configured to perform operations. The processor(s) 122 may include, for example, a microprocessor, a multi-core microprocessor, a digital signal processor, a field-programmable gate array (FPGA), a system on a chip (SoC), a collection of electronic circuits, a controller, or any combination of the above.

The UI circuitry 130 may include any circuitry configured to enable communication with and connection to one or more input devices 192 ("input device[s] 192") and a display screen 180. The UI circuitry 130 may include, for example, a keyboard controller, a mouse controller, a touch controller, a serial bus port and controller, a universal serial bus (USB) port and controller, a wireless controller and antenna (for example, configured to exchange communications structured according to a Bluetooth communication protocol), a sound card module coupled with speech recognition and/or voice-to-text software (for example, for use with a microphone and/or voice controller), a graphics adapter and port, and so forth.

The display screen 180 may be any kind of display screen including, for example, a CRT, LCD screen, LED screen, OLED screen, and so forth. The input device(s) 192 may include a keyboard, keypad, mouse, trackpad, trackball, pointing stick, joystick, touchscreen (for example, embedded within the display screen 180), microphone/voice controller, a scanner, a camera, and so forth. In some examples, instead of being external to the computing device 110, the input device(s) 192 and/or the display screen 180 may be embedded within the computing device 110 (for example, a cell phone or tablet with an embedded touchscreen).

The memory 140 may include any kind of digital system memory, such as random-access memory (RAM). The memory 140 may store an operating system (OS, not depicted, for example, a Linux, UNIX, Windows, MacOS, or similar operating system) and various drivers and other applications and software modules, including the SCA 150, which are configured to be executed on the processing circuitry 120 based on various data. The memory 140 may include databases 178 storing data accessible by the SCA 150. In one example, the databases 178 may include a first database 182 and a second database 184. In some examples, the databases 178 may be included in one or more external servers and not included in memory 140. In other examples, the databases 178 may include a different number of databases, such as one database, or more than two databases.

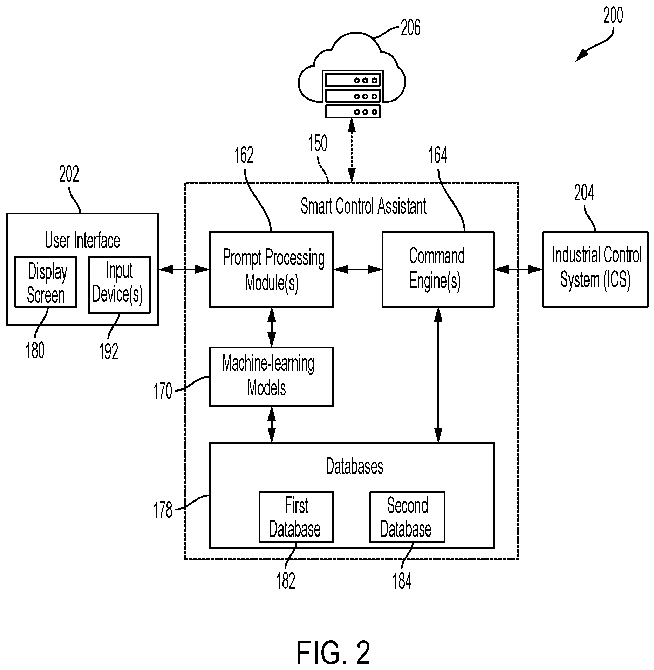

The SCA 150 includes at least one prompt processing module 162 ("prompt processing module[s] 162"), at least one command engine 164 ("command engine[s] 164"), and machine-learning models (or algorithms) 170. The SCA 150 also includes a graphic user interface (GUI) 160 configured to display information in an SCA window 190 on the display screen 180 and interact with a user 194 via the input device(s) 192. The SCA 150 may be coupled to an ICS (see FIG. 2) and may be configured to output function calls to the ICS. The machine-learning models 170 may include at least one of a natural language processing model 172, a speech recognition model 174, and an image recognition model 176.

The memory 140 may also store various other data structures used by the OS, the SCA 150, the prompt processing module(s) 162, the command engine(s) 164, the databases 178, the GUI 160, and/or various other applications and drivers. In some examples, the memory 140 may also include a persistent storage portion. The persistent storage portion of the memory 140 may be made of one or more persistent storage devices, such as magnetic disks, flash drives, solid-state storage drives, or other types of storage drives. The persistent storage portion of the memory 140 may be configured to store programs and data even while the computing device 110 is powered off. The OS, the SCA 150, the prompt processing module(s) 162, the command engine(s) 164, the databases 178, the GUI 160, and/or various other applications and drivers may be stored in this persistent storage portion of the memory 140 so that they may be loaded into a system portion of the memory 140 upon a system restart or as needed. When stored in non-transitory form in either the volatile or persistent portion of the memory 140, each of the OS, the SCA 150, the prompt processing module(s) 162, the command engine(s) 164, the databases 178, the GUI 160, and/or various other applications and drivers may form a computer program product. The processing circuitry 120 running one or more applications thus forms a specialized circuit constructed and arranged to carry out the various processes described herein.

FIG. 2 illustrates a block diagram of a control system 200 including the SCA 150 according to an example. In one example, the prompt processing module(s) 162 is coupled to a user interface 202, the command engine(s) 164, and the machine-learning models 170. The user interface 202 includes the display screen 180 and the input device(s) 192. In some examples, the prompt processing module(s) 162 may be operated or executed by a first processor of the processor(s) 122. The machine-learning models 170 may also be coupled to the databases 178. For example, the machine-learning models 170 may be coupled to the first database 182, the second database 184, or both of the databases 182, 184. For purposes of explanation, non-limiting examples may be provided in which the machine-learning models 170 are coupled to the first database 182.

The command engine(s) 164 may also be coupled to the databases 178 and an ICS 204. For example, the command engine(s) 164 may be coupled to the first database 182, the second database 184, or both of the databases 182, 184. For purposes of explanation, non-limiting examples may be provided in which the command engine(s) 164 are coupled to the second database 184.

In some examples, the command engine(s) 164 may be operated or executed by a second processor of the processor(s) 122. In certain examples, the first processor may be independent from the second processor. In other examples, the first and second processors may be included in a common core processor. In still other examples, the machine-learning models 170 and the command engine(s) 164 may be operated or executed by the same processor. In some examples, the SCA 150 may be coupled to a cloud server 206 via the external network 134, such as the Internet.

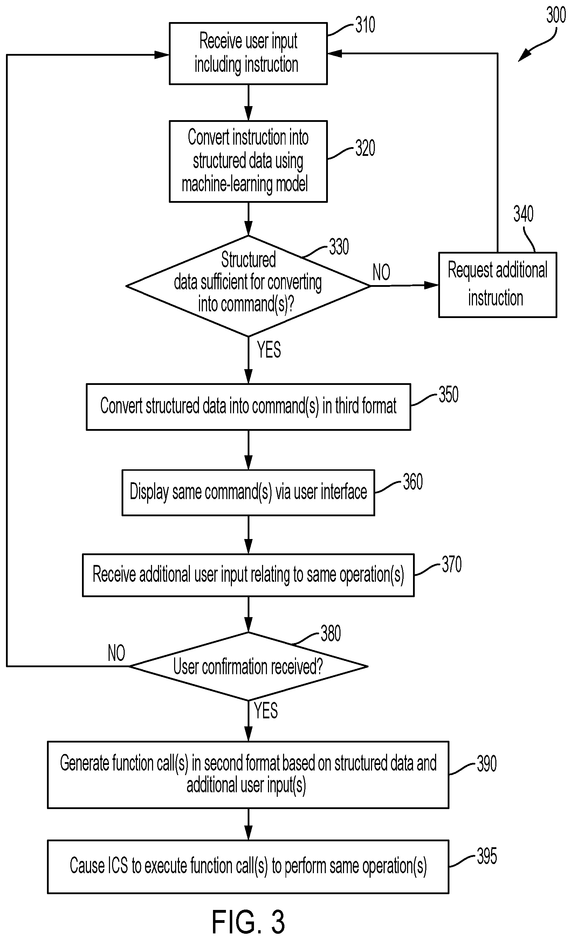

In operation, in some examples, the SCA 150 may receive user input(s) via the user interface to instruct the ICS 204 to perform one or more operations. The SCA 150 may convert the user input(s) into function call(s) suitable for the ICS 204 to execute. The SCA 150 may then provide the function call(s) to the ICS 204 to perform the one or more operations. In other examples, the SCA 150 may retrieve feedback information relating to the ICS 204 from the ICS 204 and/or at least one of the first database 182 and the second database 184 and display the feedback information to the user 194 via the user interface 202. In one example, the SCA 150 may communicate with the cloud server 206 (for example, via the external network 134) to retrieve various data to be used for generating function call(s) or displaying information to the user 194. The operating processes of the SCA 150 are described in more detail below with respect to FIG. 3.

FIG. 3 illustrates a process 300 for operating the SCA 150 according to an example. For example, a user (such as the user 194) may operate the SCA 150 to interact with or otherwise control various units of equipment and software, such as various components of the ICS 204.

At act 310, in one example, the processor(s) 122 of the SCA 150 may receive a user input (for example, a first user input). In some examples, the first user input may include an instruction in an instruction format (for example, a natural language text) input using a keyboard or touchscreen of the input devices 192. The SCA 150 may be configured to convert instructions that include particular information, such as information that the SCA 150 can use to create structured data. For example, the instruction in the first user input may capture a user desire or general request for one or more operations to be performed by the ICS 204. The one or more operations, in certain examples, can include or cause the ICS 204 to configure and/or control processes and/or operations that take place in the ICS 204 and/or in any entities under the control of the ICS 204, including but not limited to real-time process control, data acquisition and monitoring, and automated equipment control (including but not limited to control of sensors, transmitters, actuators, switches, fieldbus modules, input/output [I/O] modules, and so forth), including implementations that use a set of distributed controllers that distribute one or more control functions across multiple controllers.

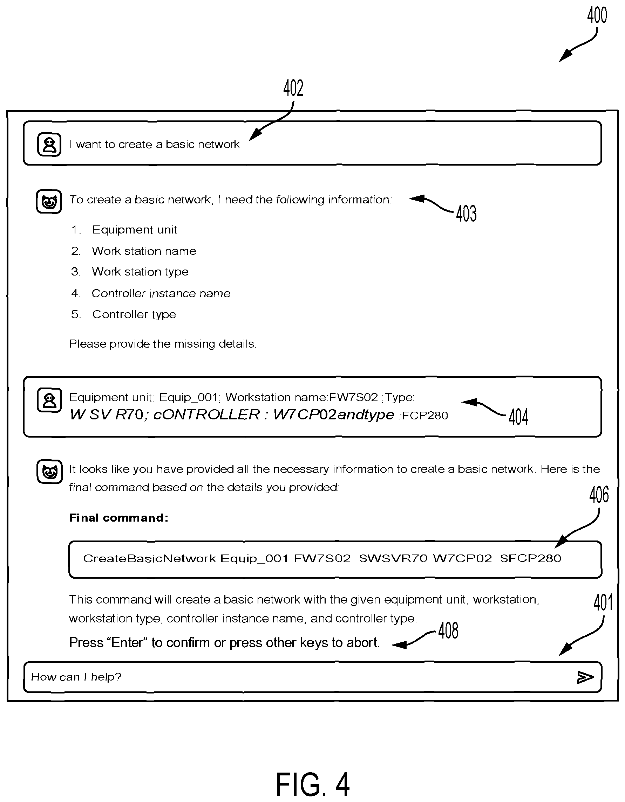

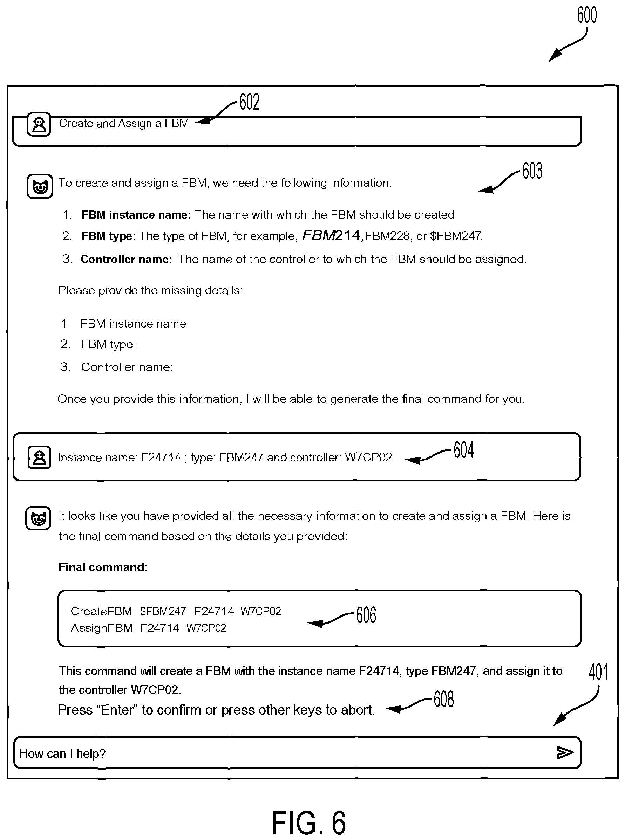

For example, FIG. 4 illustrates a screenshot of a text exchange 400 between the SCA 150 and a user 194 who wishes to create a basic network. The exchange 400 includes a user input including an instruction 402 in a natural language text format submitted by the user 194, which recites, "I want to create a basic network." In another example, FIG. 6 illustrates a screenshot of a text exchange 600 between the SCA 150 and a user 194 who wishes to create and assign a fieldbus module (FBM). The exchange 600 includes an instruction 602 which recites, "Create and Assign a FBM." In other examples, the instruction may be in the format of an audio input, such as a user utterance input using a microphone (for example, of the input devices 192). In yet other examples, the instruction may be in the format of an image obtained by a scanner or camera (for example, of the input devices 192). In each of these examples, the instructions 402, 602 may not include all information that the SCA 150 needs to fulfill the instructions 402, 602 (that is, to create a basic network or to create and assign an FBM).

At act 320, in one example, the processor(s) 122 may convert the instruction in the first user input into structured data using at least one of the machine-learning models 170. In the example of FIG. 4, the processor(s) 122 may use the natural language processing model 172 to parse or convert the instruction 402 and extract structured data. In the example of FIG. 6, the processor(s) 122 may use the natural language processing model 172 to parse or convert the instruction 602 and extract structured data. The natural language processing model 172 may be or include one of various generative natural language processing models, including GPT-4, Claude 2, LLaMA-2, Gemini, and Mistral. At least some of these natural language processing models 172 may be capable of tolerating certain informalities or formatting issues in the instruction 402, 602 while converting the instruction 402, 602 into the structured data. In other examples, when the instruction is in a user utterance format (not illustrated), the processor(s) 122 may use the speech recognition model 174 to convert the instruction in the user utterance into structured data. The speech recognition model 174 may include at least one of GPT-4, LLaMA-2, or Gemini.

In yet other examples, when the instruction received at act 310 is in an image format (not illustrated), such as a scanned or camera-captured image of a specification label or faceplate of a control device, the processor(s) 122 may use the image recognition model 176 to convert the instruction in the image into structured data. The image recognition model 176 may include at least one of GPT-4, LLaMA-2, Gemini, or Mistral. For example, the processor(s) 122 may convert elements in the image, such as the make, type, revision, protocol, device description files, and other configuration details of the control device into structured data. In some examples, the processor(s) 122 may communicate with the first database 182 and/or the cloud server 206 to implement the machine-learning models 170. The first database 182 may include or be coupled to a knowledge database for implementing the machine-learning models 170.

At act 330, in one example, the processor(s) 122 may determine whether the converted structured data are sufficient for converting into one or more commands to perform one or more operations of the ICS 204. If the processor(s) 122 determines that the structured data include sufficient information (330 YES), then the process 300 proceeds to act 350. For example, a set of necessary parameters may be needed to perform a particular operation of the ICS 204. Otherwise, if the processor(s) 122 determines that the structured data are insufficient for converting into a command to perform one or more ICS operations (330 NO), the process 300 proceeds to act 340 to request an additional instruction from the user 194.

In certain examples, the instruction in the first user input received at act 310 may not be proper for the ICS 204 to operate upon. For example, the instruction may be mistakenly intended to instruct a different ICS other than the ICS 204 coupled to the SCA 150 or may include an operation that the ICS 204 would be incapable of executing. In other examples, although the instruction properly relates to one or more executable operations of the ICS 204, the instruction may not include sufficient data for the ICS 204 to perform the one or more operations. In these examples, at act 340, the processor(s) 122 may prompt the user 194 to provide an additional instruction or to modify the previous instruction, and then await another user input at act 310. For example, if the first user input received at act 310 relates to a different ICS other than the ICS 204, the processor(s) 122 may inform the user 194 of this fact and prompt the user 194 to provide an input relating to the ICS 204.

Referring again to FIG. 4, in one example, because the SCA 150 may need additional information in the structured data for converting the structured data to a command relating to an operation of the ICS 204, the act 340 may include displaying a first prompt 403 via the SCA window 190 to request another instruction including a list of missing data for creating the basic network. The list may include "1. Equipment unit," "2. Work station name," "3. Work station type," "4. Controller instance name," and "5. Controller type." In this example, returning to act 310, the processor(s) 122 then receives a second user input that includes a second instruction 404 in a natural language text format. Specifically, the second instruction 404 is input by the user 194 and recites, "Equipment unit: Equip_001; Workstation name:FW7S02 ;Type: WSVR70; cONTROLLER : W7CP02andtype :FCP280." In other examples, the second instruction in the second user input may be in the format of a user utterance or an image and does not need to be in the same instruction format as the previous instruction.

Referring again to FIG. 6, in one example, at act 340, the processor(s) 122 displays a first prompt 603 in the SCA window 190 to request another instruction including a list of missing data for creating and assigning the FBM. The list may include "FBM instance name," "FBM type," and "Controller name." Returning to act 310, the processor(s) 122 then receives a second user input including a second instruction 604 providing the requested missing data in the natural language text format. In this example, the second instruction 604 includes information about the instance name ("F24714") of the FBM, the type of the FBM ("FBM247"), and the name of the controller ("W7CP02") that the FBM should be assigned to.

In these examples, again at act 320, the processor(s) 122 may then convert the second instruction (for example, the second instruction 404 and/or 604) in the second user input into second structured data to supplement the previously converted structured data. The processor(s) may use a corresponding one of the machine-learning models 170 to convert the second instruction based on the format of the second instruction. The process 300 then proceeds again to the act 330. In this instance of act 330, the processor(s) 122 may determine that the second user input has provided all of the information sufficient to fulfill the request of the user 194 (330 YES) and thus proceed to act 350.

At the act 350, in one example, the processor(s) 122 may convert the structured data (and the second structured data, if applicable) into one or more commands in a command format. For example, the command format may be a script format different from the format(s) of the instruction(s). In some examples, the processor(s) 122 may employ the same one of the machine-learning models 170 in the act 320 to convert the structured data into the one or more commands.

At act 360, in one example, the processor(s) 122 may display the one or more commands to the user 194 via the SCA window 190 of the user interface 202. In the example of FIG. 4, the processor(s) 122 may display a command 406 in a script format (that is, "CreateBasicNetwork Euip_001 FW7S02 $WSVR70 W7CP02 $FCP280") which is not a DirectAccess script format and is more understandable to the user 194. In the example of FIG. 6, the processor(s) 122 may display a command 606 in a script format (that is, "CreateFBM $FBM247 F24714 W7CP02 AssignFBM F24714 W7CP02"). In some examples, at the act 360, the processor(s) 122 may also display a second prompt to request an additional user input after displaying the one or more commands. In the example of FIG. 4, a second prompt 408 is displayed following the command 406 to request user confirmation that the command 406 is accurate and the user 194 wants to proceed with generating a function call. In the example of FIG. 6, a second prompt 608 is displayed following the command 606 to request user confirmation that the command 606 is accurate and the user 194 wants to proceed with generating a function call.

At act 370, in one example, the processor(s) 122 may receive an additional user input (for example, a third user input) relating to the one or more operations. In one example, the processor(s) 122 may receive a third user input indicating a confirmation that the one or more commands are accurate. The confirmation may simply be indicated by the user 194 pressing the "Enter" key or clicking a pointer. In another example, the processor(s) 122 may receive a third user input including no confirmation, such as pressing keys other than the "Enter" key, indicating that the one or more commands are inaccurate and/or that the user desire or general request needs to be changed or aborted.

At act 380, in one example, the processor(s) 122 may determine whether a user confirmation of the accuracy of the one or more commands is received in the third user input. If the processor(s) 122 determines that a user confirmation is received (380 YES), the process 300 proceeds to act 390. If, however, the processor(s) 122 determines that the user confirmation is not received (380 NO), the process 300 returns to the act 310 to abort or modify the user desire or general request.

In various examples, if the second user input is received at the act 340, the acts 370 and 380 may be skipped so that no user confirmation is needed for the processor(s) 122 to generate the one or more function calls.

In some examples, the processor(s) 122 may execute the prompt processing module(s) 162 to perform at least one of the acts 310, 320, 330, 340, 350, 360, 370, and 380.

At the act 390, in one example, the processor(s) 122 may generate one or more function calls in a function-call format based on the structured data and the additional user input(s). In some examples, the function-call format may be different from the instruction format and the command format. For example, the function-call format may be a DirectAccess script format compatible with or acceptable to the ICS 204 for performing the one or more operations. In certain examples, the processor(s) 122 may communicate with the second database 184 and/or the cloud server 206 to generate the one or more function calls. The second database 184 and/or the cloud server 206 may store multiple function calls from which the one or more function calls may be selected based on the one or more commands or the structured data (and the second structured data, if applicable). In some examples, the processor(s) 122 may access other data stored in the second database 184, such as DirectAccess scripts, database queries, application programming interface (API) calls, diagnostic assistance, and so forth.

At act 395, in one example, the processor(s) 122 may cause the ICS 204 to execute the one or more function calls to perform the one or more operations. The one or more operations can include those that include or cause the ICS 204 to configure and/or control processes and/or operations that take place in the ICS 204 and/or in any entities under the control of the ICS 204, as noted previously. In some examples, the act 395 may include providing the one or more function calls to the ICS 204 via a communication link, which may cause the ICS 204 to execute the one or more function calls and perform the one or more operations. The processor(s) 122 may also provide other information to the ICS 204, including device templates, configuration instances, other scripts, and so forth. The ICS 204 may include a DCS (such as an ECOSTRUXURE^{®} FOXBORO^{®} DCS, available from Schneider Electric of Rueil-Malmaison, France) and/or a CSS. In some examples, the ICS 204 may operate a hardware component (such as a field device) of the ICS 204 to perform at least one of the one or more operations. In some examples, the ICS 204 may communicate with the hardware component using a Highway Addressable Remote Transducer (HART) protocol. In one example, the ICS 204 may operate a software component (such as an ECOSTRUXURE^{®} Field Device Expert [FDE]) of the ICS 204 to perform at least one of the one or more operations.

In some examples, the processor(s) 122 may execute the command engine(s) 164 to perform at least one of the acts 390 and 395.

Actual examples of the process 300 are described below with respect to FIGS. 4-7. As discussed above, FIG. 4 illustrates the screenshot of the exchange 400 on the SCA window 190 for operating the SCA 150 according to an example. In one example, the processor(s) 122 of the SCA 150 receives the first user input including the first instruction 402 (that is, "I want to create a basic network") relating to a proper operation of the SCA 150 in a natural language text format. In response to insufficient information in the first instruction 402, the processor(s) 122 displays the first prompt 403 in the SCA window 190 to request an additional instruction including a list of information ("missing details") for creating the basic network. The processor(s) 122 then receives a second user input including the second instruction 404 providing the requested information again in the natural language text format. In this example, the second instruction 404 includes information about the hardware components (a workstation and a controller) of the basic network, that is, the name of the workstation ("FW7S02"), the type of the workstation ("WSVR70"), the name of the controller ("W7CP02"), and the type of the controller ("FCP280"). In some examples, a text field 401 may be used for inputting instructions in a text format.

In response to receiving the first instruction 402 and the second instruction 404, the processor(s) 122 converts the instructions 402, 404 into structured data using the natural language processing model 172 of the machine-learning models 170 based on various data in the first database 182. The processor(s) 122 determines that the structured data are sufficient for creating the basic network. The processor(s) 122 then converts the structured data into the command 406 and displays the command 406 in the SCA window 190 to the user 194. In this example, the command 406 is in a script format and includes an instance name ("Equip_001") of the basic network to be created. In one example, the processor(s) 122 may query the first database 182 and/or the second database 184 to search for appropriate command script(s) and the instance name for the basic network. In some examples, the processor(s) 122 may display the second prompt 408 for the user 194 to confirm the accuracy of the command 406. After receiving a third user input (not illustrated) indicating a confirmation of the accuracy of the command 406, the processor(s) 122 generates a function call based on the structured data and/or the command 406 using various data in the second database 184 and/or the cloud server 206 and provides the function call to the ICS 204 to perform the creation of the basic network.

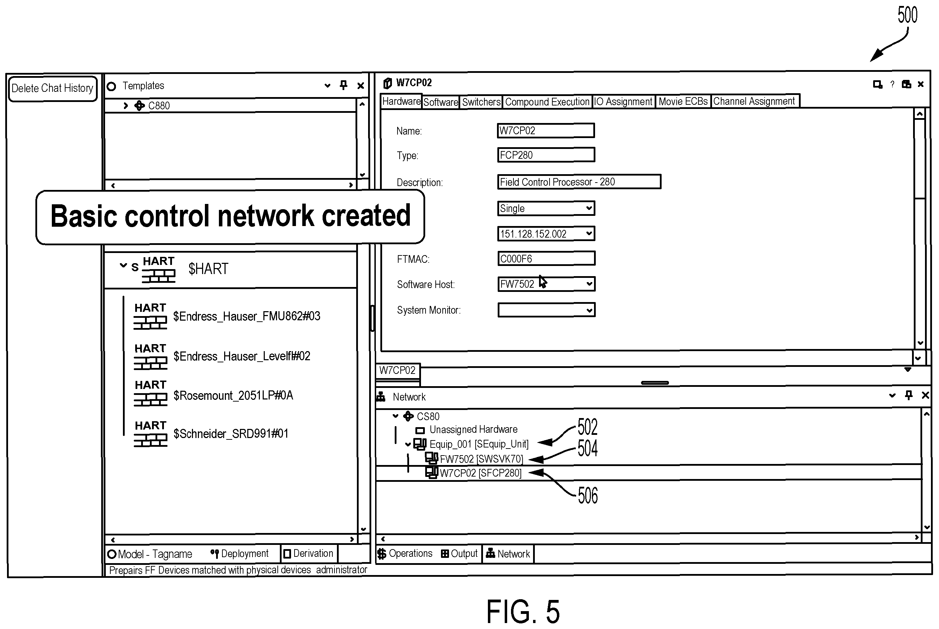

FIG. 5 illustrates a screenshot of an ICS window 500 in response to an operation of the ICS 204 facilitated by the SCA 150 according to an example. In one example, after the ICS 204 has created the basic network as illustrated in FIG. 4, the ICS window 500 displaying the current configuration of the ICS 204 may be updated to indicate the creation of the basic network. The ICS window 500 may display a first icon 502 indicating that the basic network (denoted as "Equip_001 [$Equip_Unit]") has been created. The ICS window 500 may also display a second icon 504 corresponding to the workstation (denoted as "FW7S02 [$WSVR70]") and a third icon 506 corresponding to the controller (denoted as "W7CP02 [$FCP280]"), both of which are hardware components of the basic network. The user 194 may then start utilizing and controlling the basic network and its components via the ICS window 500.

As discussed above, FIG. 6 illustrates the screenshot of the text exchange 600 on the SCA window 190 for operating the SCA 150 according to an example. In one example, the processor(s) 122 of the SCA 150 receives the first user input including the first instruction 602 (that is, "Create and Assign a FBM") relating to two operations of the SCA 150 in a natural language text format. In response to insufficient information in the first instruction 602, the processor(s) 122 displays the first prompt 603 in the SCA window 190 to request an additional instruction including a list of information ("missing details") for creating and assigning the FBM. The first prompt 603 may include available choices of resources relating to the operations, such as selectable FBM types ("FBM214, FBM228, or $FBM247") of the FBM to be created and assigned.

In some examples, the processor(s) 122 may query the first database 182 and/or the second database 184 for the available choices of resources. The processor(s) 122 then receives the second user input including the second instruction 604 providing the requested information in the natural language text format. In this example, the second instruction 604 includes information about the instance name ("F24714") of the FBM, the type of the FBM ("FBM247"), and the name of the controller ("W7CP02") that the FBM should be assigned to. In some examples, the text field 401 may be used for inputting instructions in a text format.

In response to receiving the first instruction 602 and the second instruction 604, the processor(s) 122 converts the instructions 602, 604 into structured data using the natural language processing model 172 of the machine-learning models 170 based on various data in the first database 182 and determines that the structured data are sufficient for creating and assigning the FBM. The processor(s) 122 then converts the structured data into the command 606 and displays the command 606 in the SCA window 190 to the user 194. In this example, the command 606 is in a script format and includes function call scripts "CreateFBM" and "AssignFBM." In one example, the processor(s) 122 may query the first database 182 and/or second database 184 to search for appropriate command script(s) and check for potential conflicts of the instance name. In some examples, the processor(s) 122 may display the second prompt 608 for the user 194 to confirm the accuracy of the command 606. After receiving a second user input (not illustrated) indicating a confirmation of the accuracy of the command 606, the processor(s) 122 generates two function calls based on the structured data and/or the command 606 using various data in the second database 184 and/or the cloud server 206 and provides the function calls to the ICS 204 to perform the creation and assignment of the FBM.

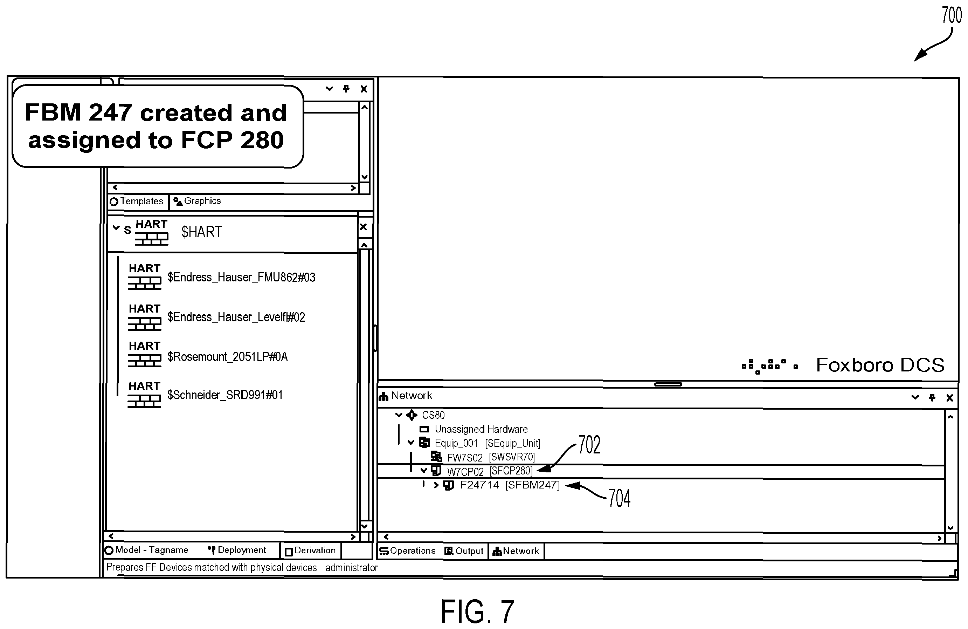

FIG. 7 illustrates a screenshot of an ICS window 700 in response to operations of the ICS 204 facilitated by the SCA 150 according to an example. In one example, after the ICS 204 has created and assigned the FBM as illustrated in FIG. 6, the ICS window 700 displaying the current configuration of the ICS 204 may be updated to indicate the creation and the assignment of the FBM. The ICS window may display a first icon 702 corresponding to the controller (denoted as "W7CP02 [$FCP280]") to which the FBM has been assigned and a second icon 704 corresponding to the FBM (denoted as "F24714 [$FCP280]"). In some examples, the controller represented by the icon 702 in FIG. 7 may be the same controller represented by the icon 506 in FIG. 5. The user 194 may then start utilizing and controlling the FBM represented by the second icon 704 via the ICS window 700.

In some examples, the SCA 150 may be used to facilitate other types of configuration processes of the ICS 204, including creating HART device templates, creating and assigning controllers, creating and assigning HART device instances, deploying a control processor, and so forth. The SCA 150 may facilitate the operations of various devices of the ICS 204, such as control processors, FBMs, edge devices, and data communication network (DCN) devices. In various examples, the SCA 150 may be used to facilitate controlling the ICS 204 to perform other operations in addition to configuring components of the ICS 204 as described above. For example, the user 194 may operate the SCA 150 to facilitate performing diagnostics on the ICS 204 and/or extracting knowledge or information relating to the ICS 204 from the databases 178 and/or the cloud server 206.

Referring again to FIG. 2, in one example, in response to receiving a user input to perform a diagnosis on one or more components of the ICS 204, the processor(s) 122 may perform the diagnosis using various data collected from the ICS 204 or stored in the second database 184 and/or the cloud server 206 and provide the results of the diagnosis to the user 194 via the user interface 202. In some examples, the diagnosis may produce an alarm signal, such as a signal indicating a malfunction of a component of the ICS 204. The processor(s) 122 may automatically provide the alarm signal to the user 194 via the user interface 202. In certain examples, the diagnosis may include analyzing the alarm signal and providing a solution to the user 194 via the user interface 202 using the second database 184 and/or the cloud server 206.

In another example, in response to receiving a user input requesting information relating to one or more components of the ICS 204, the processor(s) 122 may collect the requested information from the ICS 204 and/or obtain or extract the requested information by querying the first database 182, the second database 184, and/or the cloud server 206 and then provide the information to the user 194 via the user interface 202. In some examples, the processor(s) 122 may automatically update the databases 178 and/or the cloud server 206 by forwarding information from the ICS 204 as collected or monitored in real time. These processes are variations of the process 300 and included in the present disclosure.

In various examples, the SCA 150 may include multiple prompt processing modules in the prompt processing module(s) 162 to produce different types of commands. In some examples, the SCA 150 may include multiple command engines in the command engine(s) 164 to generate different types of function calls for operating different ICSs.

In each of the examples included in this disclosure, the instruction(s) in the user input(s) may be in the format of natural language texts, user utterances, or scanned or camera-captured images and a corresponding machine-learning model of the machine-learning models 170 may be used by the processor(s) 122 to convert the instruction(s) into structure data and then, if applicable, into one or more commands. In some examples, executing the command engine(s) 164 may not include implementing a machine-learning model.

Various controllers, such as the processor(s) 122, may execute various processes or operations discussed above, including the process 300. For example, a controller of the SCA 150 may include or execute the prompt processing module(s) 162, the command engine(s) 164, and the machine-learning models 170. The controller may also execute one or more instructions stored on one or more non-transitory computer-readable media, which the controller may include and/or be coupled to, which may result in manipulated data. The non-transitory computer-readable media may include memory and/or storage. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

Below are provided a number of examples.

According to an example, it is provided at least one non-transitory computer-readable medium storing thereon sequences of computer-executable instructions for operating an industrial control system, the industrial control system configured to accept a plurality of function calls in a first format, the sequences of computer-executable instructions including instructions that instruct at least one processor to:
receive a first user input including an instruction in a second format different from the first format, the instruction relating to instructing the industrial control system to perform at least one operation;
convert the instruction into structured data using a machine-learning model;
receive, after receiving the first user input, a second user input relating to the at least one operation;
generate one or more function calls in the first format based on the structured data and at least a portion of the second user input; and
cause the industrial control system to execute the one or more function calls to perform the at least one operation.

According to an example, the at least one non-transitory computer-readable medium, wherein the machine-learning model includes at least one of a group including GPT-4, Claude 2, LLaMA-2, Gemini, or Mistral models.

According to an example, the at least one non-transitory computer-readable medium, wherein:
the instructions further instruct the at least one processor to convert the second user input into second structured data using a second machine-learning model, and
generating the one or more function calls in the first format is performed based on the structured data and the second structured data.

According to an example, the at least one non-transitory computer-readable, wherein the second format is a natural language text format, and the machine-learning model includes a natural language processing model.

According to an example, the at least one non-transitory computer-readable medium, wherein:
the second user input includes information in the natural language text format,
receiving the second user input includes converting the information into second structured data using the natural language processing model, and
generating the one or more function calls is performed based on the structured data and the second structured data.

According to an example, the at least one non-transitory computer-readable medium, wherein:
the second user input includes information in a speech audio format,
receiving the second user input includes converting the information into second structured data using a second machine-learning model, the second machine-learning model including a speech recognition model, and
generating the one or more function calls is performed based on the structured data and the second structured data.

According to an example, the at least one non-transitory computer-readable medium, wherein:
the second user input includes information in an image format,
receiving the second user input includes converting the information into second structured data using a second machine-learning model, the second machine-learning model including an image recognition model, and
generating the one or more function calls is performed based on the structured data and the second structured data.

According to an example, the at least one non-transitory computer-readable medium, wherein the second format is a speech audio format, and the machine-learning model includes a speech recognition model.

According to an example, the at least one non-transitory computer-readable medium, wherein the second format is an image format, and the machine-learning model includes an image recognition model.

According to an example, the at least one non-transitory computer-readable medium, wherein:
the instructions further instruct the at least one processor to:
convert the structured data into at least one command in a third format different from the first format and the second format, and
display the at least one command in the third format via a user interface, and
generating the one or more function calls is performed based on the at least one command.

According to an example, the at least one non-transitory computer-readable medium, wherein:
the instructions further instruct the at least one processor to display, via a user interface, a prompt to request additional information relating to the at least one operation in response to receiving the first user input,
the second user input includes at least a portion of the additional information, and
generating the one or more function calls is performed in response to receiving the second user input.

According to an example, the at least one non-transitory computer-readable medium, wherein the prompt includes information relating to one or more available resources for providing the additional information.

According to an example, the at least one non-transitory computer-readable medium, wherein:
the instructions further instruct the at least one processor to display, via a user interface, a prompt to request confirmation to execute the instruction, the prompt including at least a portion of the structured data, and
causing the industrial control system to execute the one or more function calls is performed in response to receiving the confirmation in the second user input.

According to an example, the at least one non-transitory computer-readable medium, wherein the at least one operation includes at least one of configuring a hardware component of the industrial control system, diagnosing an alarm signal associated with a hardware component of the industrial control system, or obtaining information relating to a hardware component of the industrial control system.

According to an example, the at least one non-transitory computer-readable medium, wherein generating the one or more function calls and/or causing the industrial control system to perform the at least one operation includes communicating with at least one memory device.

According to an example, it is proposed a computer system for operating an industrial control system configured to accept a plurality of function calls in a first format, the computer system comprising:
a display screen;
an input device configured to receive input from a user; and
processing circuitry coupled to a memory configured to:
   receive a first user input including an instruction in a second format different from the first format, the instruction relating to instructing the industrial control system to perform at least one operation,
   convert the instruction into structured data using a machine-learning model,
   receive, after receiving the first user input, a second user input relating to the at least one operation,
   generate one or more function calls in the first format based on the structured data and at least a portion of the second user input, and
   cause the industrial control system to execute the one or more function calls to perform the at least one operation.

According to an example, the computer system, wherein the machine-learning model includes at least one of a group including GPT-4, Claude 2, LLaMA-2, Gemini, or Mistral models.

According to an example, the computer system, wherein the second format is a natural language text format, and the machine-learning model includes a natural language processing model.

According to an example, the computer system, wherein:
the second user input includes information in the natural language text format,
receiving the second user input includes converting the information into second structured data using the natural language processing model, and
generating the one or more function calls is performed based on the structured data and the second structured data.

According to an example, it is proposed a method of operating an industrial control system configured to accept a plurality of function calls in a first format, the method comprising:
receiving a first user input including an instruction in a second format different from the first format, the instruction relating to instructing the industrial control system to perform at least one operation;
converting the instruction into structured data using a machine-learning model;
receiving, after receiving the first user input, a second user input relating to the at least one operation;
generating one or more function calls in the first format based on the structured data and at least a portion of the second user input; and
causing the industrial control system to execute the one or more function calls to perform the at least one operation.

## Claims

1. A computer system (100) for operating an industrial control system (204), the industrial control system (204) being configured to accept a plurality of function calls in a first format, the computer system (100) comprising:
a user interface (202) including a display screen (180) and at least one input device (192); and
processing circuitry (120) coupled to a memory (140), wherein the processing circuitry (120) is configured to receive, via the user interface (202), a first user input including an instruction in a second format different from the first format, the instruction relating to instructing the industrial control system (204) to perform at least one operation, **characterised in that** the processing circuitry (120) is configured to:
convert the instruction into structured data using a trained machine learning model (170);
receive, after receiving the first user input, a second user input relating to the at least one operation;
generate one or more function calls in the first format based on the structured data and at least a portion of the second user input; and
cause the industrial control system (204) to execute the one or more function calls to perform the at least one operation.

2. The computer system (100) according to claim 1, wherein the processing circuitry (120) is configured to determine whether the structured data are sufficient for generating the one or more function calls in the first format and, in response to a determination that the structured data are insufficient, to output, via the user interface (202), a prompt requesting additional information relating to the at least one operation, and to receive the additional information in the second user input.

3. The computer system (100) according to claim 2, wherein the prompt includes information relating to one or more available resources for providing the additional information.

4. The computer system (100) according to any of claims 1 to 3, wherein the second format is a natural language text format and the trained machine learning model (170) comprises a natural language processing model (172).

5. The computer system (100) according to claim 4, wherein the processing circuitry (120) is configured to convert information comprised in the second user input into second structured data using the natural language processing model (172), and to generate the one or more function calls in the first format based on the structured data and the second structured data.

6. The computer system (100) according to any of claims 1 to 3, wherein the second format is a speech audio format and the trained machine learning model (170) comprises a speech recognition model (174).

7. The computer system (100) according to any of claims 1 to 3, wherein the second format is an image format and the trained machine learning model (170) comprises an image recognition model (176) configured to extract configuration parameters of a control device into the structured data.

8. The computer system (100) according to any of claims 1 to 7, wherein the processing circuitry (120) is configured to convert the structured data into at least one command in a third format different from the first format and the second format, to display the at least one command via the user interface (202), and to generate the one or more function calls in the first format based on the at least one command.

9. The computer system (100) according to claim 8, wherein the processing circuitry (120) is configured to display, via the user interface (202), a confirmation prompt including at least a portion of the structured data and/or the at least one command, and to cause the industrial control system (204) to execute the one or more function calls only in response to receiving a user confirmation input.

10. A computer implemented method of operating an industrial control system (204) configured to accept a plurality of function calls in a first format, the method comprising:
Receiving (310) a first user input including an instruction in a second format different from the first format, the instruction relating to instructing the industrial control system (204) to perform at least one operation, **characterised in that** the method comprises:
converting (320) the instruction into structured data using a trained machine learning model (170);
receiving (370), after receiving the first user input, a second user input relating to the at least one operation;
generating (390) one or more function calls in the first format based on the structured data and at least a portion of the second user input; and
causing (395) the industrial control system (204) to execute the one or more function calls to perform the at least one operation.

11. The method according to claim 10, comprising determining (330) whether the structured data are sufficient for generating the one or more function calls and, if the structured data are insufficient, outputting a prompt requesting (340) additional information and receiving (310) the additional information in the second user input.

12. The method according to claim 11, wherein the additional information comprises at least one missing parameter selected from: an equipment unit identifier, a workstation name, a workstation type, a controller instance name, a controller type, a fieldbus module instance name, a fieldbus module type, and a controller name.

13. The method according to any of claims 10 to 12, wherein converting the instruction into structured data comprises selecting, in dependence on the second format, at least one of: a natural language processing model (172), a speech recognition model (174), or an image recognition model (176).

14. The method according to any of claims 10 to 13, wherein the at least one operation comprises at least one of: configuring a hardware component of the industrial control system (204), diagnosing an alarm signal associated with a hardware component of the industrial control system (204), or obtaining information relating to a hardware component of the industrial control system (204).

15. A computer program comprising instructions which, when executed by processing circuitry (120) of a computer system (100), cause the computer system (100) to carry out the method according to any of claims 10 to 14.
